# EUROPÄISCHE PATENTSCHRIFT

(11) **EP 1 512 524 B1**
(45) Veröffentlichungstag und Bekanntmachung des Hinweises auf die Patenterteilung: **09.08.2006**
(21) Anmeldenummer: 03020141.2
(22) Anmeldetag: 05.09.2003
(51) Int. Cl.: B29D 30/24, B29D 30/20

(54) **Verfahren zum Aufbau einer Reifenkarkasse**
Method for manufacturing a tyre carcass
Procédé de fabrication d'une carcasse pour pneu

(43) Veröffentlichungstag der Anmeldung: 09.03.2005
(73) Patentinhaber: Continental Aktiengesellschaft, 30165 Hannover (DE)
(72) Erfinder: Doering, Werner, 30823 Garbsen (DE); Frerichs, Udo, 30669 Langenhagen (DE); Hahn, Michael, 30659 Hannover (DE); Winkler, Jens, Dr., 30173 Hannover (DE)

(56) Entgegenhaltungen:
- EP-A- 0 634 266
- EP-A- 0 822 105
- EP-A- 1 338 441
- WO-A-00/78563
- US-A- 6 022 434
- US-A- 6 126 780
- US-A1- 2002 088 551

## Beschreibung

Die Erfindung betrifft ein Verfahren zum Aufbau einer Reifenkarkasse auf einer Reifenaufbautrommel für einen selbsttragenden Radialreifen, wobei die Reifenkarkasse eine Innenschicht, Verstärkungsprofile für Seitenwände sowie Seitenwände, zumindest eine Karkasslage und Wulstbereiche aufweist und wobei die Reifenaufbautrommel mit umlaufenden Taschen zum Aufnehmen der Verstärkungsprofile versehen ist.

Selbsttragende Luftreifen, die im Bereich der Seitenwände mit Verstärkungsprofilen, welche üblicherweise einen mondsichelförmigen Querschnitt aufweisen, versehen sind, sind schon seit längerem bekannt. Der Zweck dieser Verstärkungsprofile ist, den Reifen bei einem plötzlichen Druckverlust, also im Pannenfall, auf eine gewisse Zeit bzw. für eine gewisse Laufleistung solange selbsttragend zu erhalten, dass eine Weiterfahrt möglich ist. Ein derartiger selbsttragender Reifen ist beispielsweise aus der DE-A-29 43 654 bekannt. Der Reifen ist im Bereich seiner Seitenwände jeweils mit einem ein- oder mehrteiligen, etwa mondsichelförmigen Verstärkungsprofil versehen, welches zwischen der Innenschicht und der Karkasslage angeordnet ist und einerends knapp unterhalb des Gürtels und anderends bis in die Nähe des Wulstbereiches verläuft.

Um derartige Radialreifen für Personenkraftwagen herzustellen, ist es üblich, die Reifenaufbautrommel mit Ausnehmungen bzw. umlaufenden Taschen zu versehen, um eine Auflage der Karkasslage(n) entlang einer zylindrisch umlaufenden Fläche zu gewährleisten. Auf die Reifenaufbautrommel wird vorerst die Innenschicht aufgelegt und anschließend werden im Bereich der beiden Ausnehmungen bzw. Taschen die Verstärkungsprofile positioniert. Die Kontur der Ausnehmungen bzw. Taschen ist an die Außenkontur der noch unvulkanisierten Verstärkungsprofile angepasst. Zwischen der Innenschicht und den positionierten Verstärkungsprofilen entstehen dabei leicht Lufteinschlüsse, die unerwünscht sind, da sie die Qualität und Haltbarkeit der Reifen beeinflussen.

Herkömmliche Verfahren zur Herstellung eines gattungsgemäßen Kraftfahrzeugluftreifens werden u. a. in der EP 0 634 266 A2, der US 6,022,434 und der WO 00/78563 A1 beschrieben

Der Erfindung liegt daher die Aufgabe zu Grunde, Reifenkarkassen für selbsttragende Reifen mit Verstärkungsprofilen derart aufzubauen, dass Lufteinschlüsse vermieden werden.

Gemäß dem erfindungsgemäßen Verfahren wird dieses Ziel dadurch erreicht, dass die mit der Innenschicht in Kontakt tretenden Bereiche der Verstärkungsprofile mit einer Riffelung versehen werden, welche aus einer Vielzahl von insbesondere quer zur Umfangsrichtung der Reifenaufbautrommel verlaufenden durchgehenden Nuten besteht.

Damit wird auf besonderes wirkungsvolle und einfache Weise eine Abführung von Luft gewährleistet, sodass sich keine Lufteinschlüsse mehr bilden können.

Die Riffelung an den betreffenden Bereichen der Verstärkungsprofile lässt sich auf einfache Weise durch geriffelte Prägewalzen erzeugen, die die Riffelung auf die Verstärkungsprofile durch Abrollen einprägen. Die einzelnen Nuten der Riffelung sind im Querschnitt vorzugsweise V-förmig und werden dabei mit einer Tiefe von 0,3 bis 1,2 mm, insbesondere von 0,5 bis 0,8 erstellt, ihr gegenseitiger Abstand beträgt zirka 1 bis 2 mm.

Gemäß einer Ausführungs variante des erfindungsgemäßen Verfahrens ist vorgesehen, die Innenschicht vor ihrem Aufbringen auf die Reifenaufbautrommel entsprechend der Kontur der Ausnehmungen bzw. Taschen vorzuformen. Durch diese Maßnahme wird ein Verformen der Innenschicht beim Auflegen vermieden. Gerade dieses ist ansonsten für das Entstehen von Lufteinschlüssen verantwortlich.

Das Vorformen der Innenschicht zur Anpassung ihrer Kontur an die Kontur der Reifenaufbautrommel lässt sich ebenfalls auf sehr einfache Weise durchführen. Geeignet ist beispielsweise die Verwendung von Prägerollen oder -walzen, die über das Aufbringen eines mechanischen Druckes das Vorformen der Innenschicht bewirken.

Als unterstützende Maßnahme kann ein Erwärmen der Innenschicht, beispielsweise mit Heißluft oder eine elektrische Beheizung der Prägerollen oder -walzen vorgesehen werden.

Die derart vorgeformte bzw. -geprägte Innenschicht kann separat oder bereits mit positionierten Verstärkungsprofilen auf die Reifenaufbautrommel aufgelegt werden.

Um zu gewährleisten, dass sich in Umfangsrichtung die Endbereiche der gemeinsam mit den Verstärkungsprofilen aufgebrachten Innenschicht nach dem Aufbringen entsprechend überlappen können, ist vorgesehen, dass die Innenschicht gegenüber den Verstärkungsprofilen in Umfangsrichtung versetzt positioniert wird. Die Überlappungsbereiche der Innenschicht sind daher in Umfangsrichtung auch gegenüber den aneinanderstoßenden Enden der Verstärkungsprofile versetzt.

Lufteinschlüsse zwischen den Verstärkungsprofilen in der Innenschicht können gemäß einer weiteren Ausführungsform der Erfindung auch dadurch verhindert werden, dass die Verstärkungsprofile derart auf die Reifenaufbautrommel aufgebracht werden, dass sie während des Bewegens der Trommel in Trommelquerrichtung allmählich in Kontakt mit der Innenschicht gebracht werden. Die Verstärkungsprofile werden daher im äußeren oder inneren Eckbereich der Taschen beginnend nach und nach in diese eingelegt.

Um eine gute Anlage der vorgeformten Innenschicht in den Taschen der Trommel zu unterstützen, kann der Erhebungsvorgang der Reifenaufbautrommel in zwei Teilerhebungen durchgeführt werden. Dazu wird vorerst die vorgeformte Innenschicht auf die Trommel aufgelegt, die Trommel etwas erhoben, anschließend werden die Verstärkungsprofile und die Karkasslage(n) positioniert und schließlich wird die Erhebung der Trommel vollendet.

Sowohl bei geriffelten Verstärkungsprofilen als auch bei vorgeformten Innenschichten können Entlüftungsbohrungen, die zu den Ausnehmungen bzw.

Taschen der Reifenaufbautrommel reichen und mit einem Netz von Kanälen oder dergleichen verbunden werden, dafür sorgen, dass Luft abgeführt werden kann.

Bohrungen oder Kanäle im Bereich der Ausnehmungen bzw. Taschen können ferner dafür benützt werden, die Innenschicht an die Reifenaufbautrommel anzusaugen. Von der Außenseite her kann zusätzlich auf die Innenschicht Druckluft aufgebracht werden und so ein Einformen der Innenschicht in die Ausnehmungen bzw. Taschen unterstützt werden.

Die Erfindung wird nun anhand der Zeichnung, die schematisch Ausführungsbeispiele darstellt, näher beschrieben. Dabei zeigen
Fig. 1 einen Querschnitt durch einen selbsttragenden Radialreifen für Personenkraftwagen,
Fig. 2 einen Teilbereich einer Aufbautrommel zur Herstellung einer Reifenkarkasse,
Fig. 3 einen Querschnitt durch ein Versteifungsprofil während der Bearbeitung mittels Prägewalzen und
Fig. 4 eine Draufsicht auf einen Teilbereich des Verstärkungsprofils nach der Bearbeitung durch Prägewalzen.

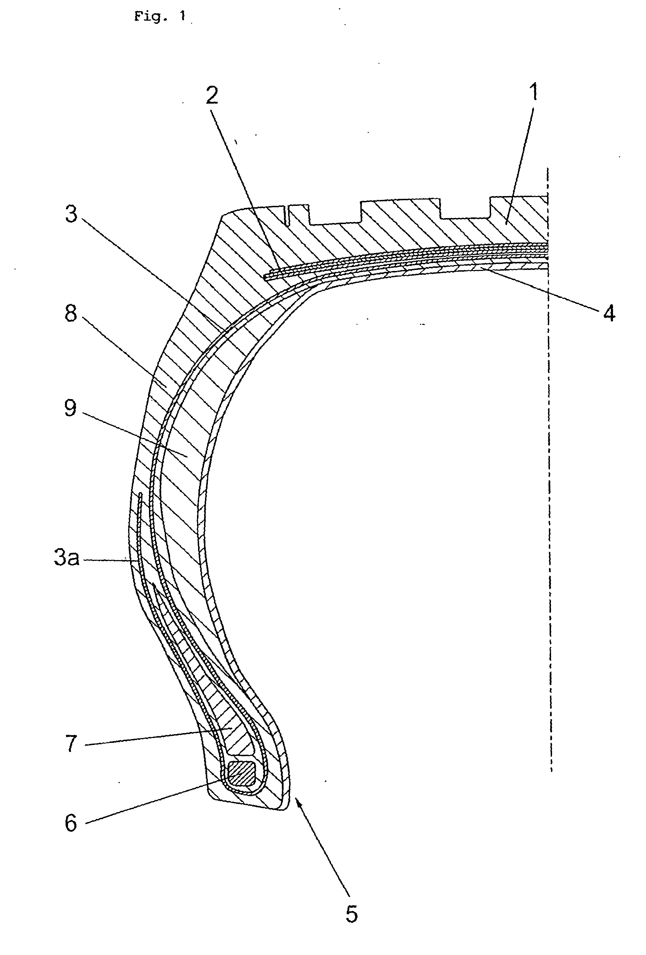

Fig. 1 zeigt im Querschnitt einen Radialreifen für Personenkraftwagen, welcher ein selbsttragender Reifen ist. Der Reifen ist daher bei einem Druckverlust im Pannenfall in der Lage, zumindest über eine gewisse Laufleistung soweit tragfähig zu sein, dass eine Weiterfahrt möglich ist. Die wesentlichen Bauteile, aus welchen sich der Reifen zusammensetzt, sind ein profilierter Laufstreifen 1, ein insbesondere zweilagiger Gürtel 2, eine vorzugsweise einlagig ausgeführte Karkasslage 3, eine luftdicht bzw. weitgehend luftdicht ausgeführte Innenschicht 4, Wülste 5 mit Wulstkernen 6 und Kernprofilen 7, Seitenwände 8 und im Querschnitt etwa mondsichelförmige Verstärkungsprofile 9. Die beiden Lagen des Gürtels 2 können in bekannter Weise aus in eine Gummimischung eingebetteten Festigkeitsträgern aus Stahlcord bestehen, welche innerhalb jeder Lage parallel zueinander verlaufen, wobei die Stahlcorde der einen Lage in kreuzender Anordnung zu den Stahlcorden der zweiten Lage orientiert sind und mit der Reifenumfangsrichtung jeweils einen Winkel zwischen 15 und 30 ° einschließen. Die Verstärkungsprofile 9 sind zwischen der Innenschicht 4 und der Karkasslage 3 angeordnet und reichen bis unter die Randbereiche des Gürtels 2 sowie in die Nähe der Wulstkerne 6 oder auch bis neben diese. Die Anordnung der Verstärkungsprofile 9 sowie deren Ausführung sind nicht Gegenstand dieser Erfindung.

Die Karkasslage 3 ist in jedem Wulst 5 von axial innen kommend um den Wulstkern 6 herumgeführt und reicht in Richtung Gürtel 2 bis auf eine gewissen Höhe in der jeweiligen Seitenwand 8 und bildet derart den sogenannten Hochschlag 3a. Zwischen dem Hochschlag 3a und Karkasslage 3 ist oberhalb jedes Wulstkernes 6 das Kernprofil 7 angeordnet.

Der Aufbau eines derartigen Reifens erfolgt aus den unvulkanisierten Bauteilen. Beim zweistufigen Aufbauverfahren wird vorerst auf einer zylindrischen Reifenaufbautrommel die sogenannte Reifenkarkasse erstellt, welche als Hauptbestandteile die Innenschicht 4, die Verstärkungsprofile 9, die Karkasslage 3, die Wulstkerne 6 und die Kernprofile 7 aufweist.

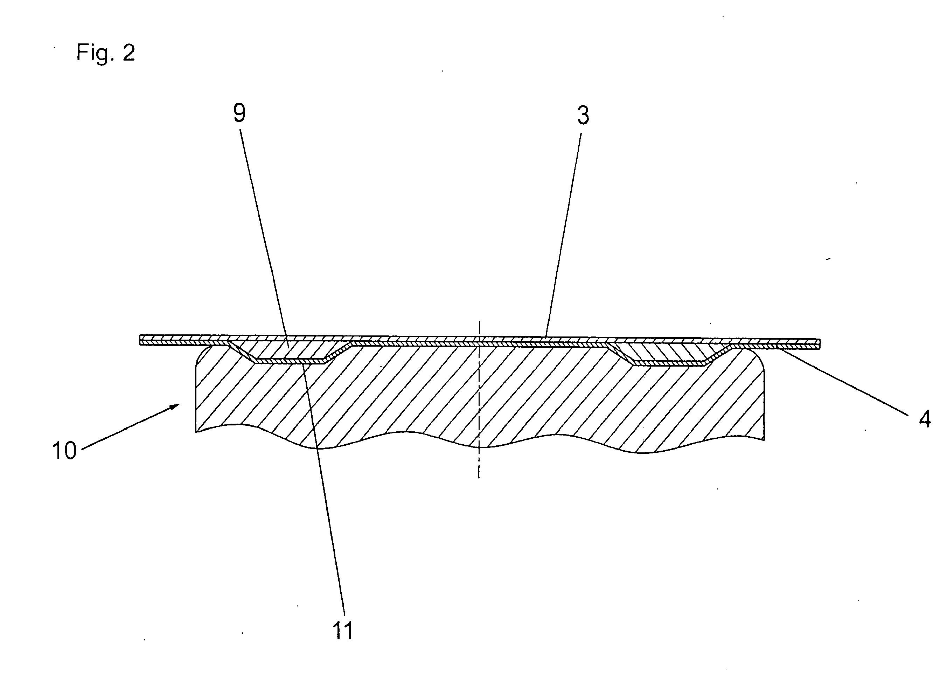

Fig. 2 zeigt eine Ansicht einer zylindrischen Reifenaufbautrommel 10. Die Reifenaufbautrommel 10 ist an ihrem Umfang mit zwei umlaufenden Ausnehmungen oder Taschen 11 zum Einlegen der Verstärkungsprofile 9 versehen, sodass die Karkasslage 3 auf der Reifenaufbautrommel nach dem Positionieren der Innenschicht 4 und der Verstärkungsprofile 9 entlang einer Zylindermantelfläche aufgelegt werden kann. Die umlaufenden Taschen 11 sind bezüglich ihrer Innenkontur an die Querschnittskontur der Verstärkungsprofile 9 angepasst.

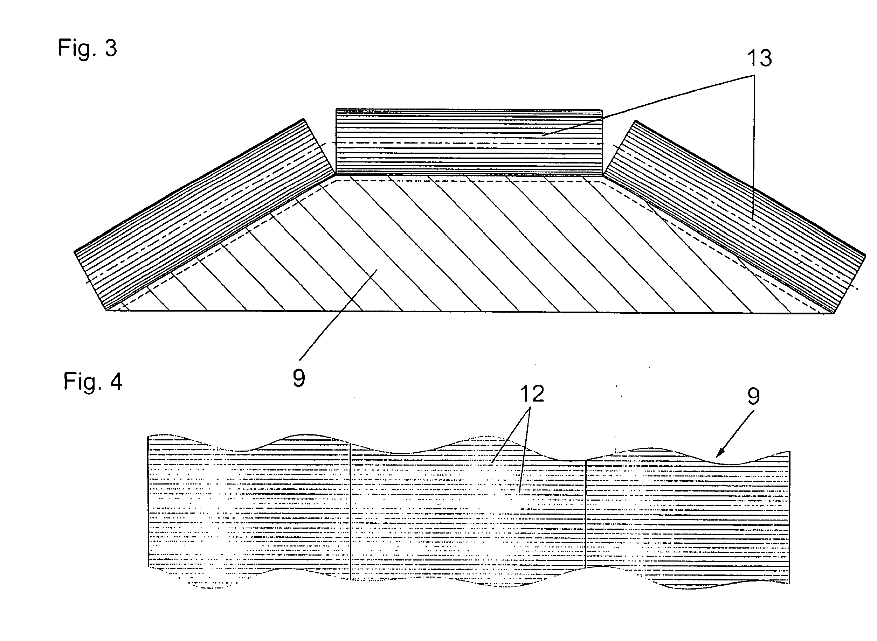

Fig. 3 zeigt eine Ausführung eines Verstärkungsprofils 9, welches im dargestellten Fall im Querschnitt eines gleichseitigen Trapezes extrudiert wurde. Die breite Basisfläche der Verstärkungsprofile 9 bildet gemeinsam mit der Außenfläche der Aufbautrommel 10 bei positionierten Verstärkungsprofilen 9 die zylindrische Auflagefläche für die Karkasslage 3.

Um Lufteinschlüsse zwischen der Innenschicht 4 und den Verstärkungsprofilen 9 beim Reifenaufbau zu vermeiden, werden, wie es Fig. 3 zeigt, die mit der Innenschicht 4 in Kontakt tretenden Flächen des Verstärkungsprofils 9 quer zur Umfangsrichtung mit einer Riffelung versehen, sodass diese Flächen mit von Seitenrand zu Seitenrand in Abschnitten gerade durchgehenden und parallel zueinander verlaufendenden Nuten 12 versehen sind. Zur Erstellung dieser Nuten 12 werden mit einer entsprechenden Riffelung versehene Prägewalzen 13 verwendet. Die Nuten 12 sind vorzugsweise V-förmig, weisen eine Tiefe von zirka 0,5 mm, insbesondere zwischen 0,3 und 1,2 mm auf, der gegenseitige Abstand der Nuten 12 beträgt etwa 1 bis 2 mm. Die Nuten 12 verhindern das Entstehen von Lufteinschlüssen zwischen der Innenschicht 4 und den Verstärkungsprofilen 9, da etwaige überschüssige Luft in jedem Fall seitlich abgeführt wird.

Zusätzlich können weitere Maßnahmen getroffen werden, um das Entstehen von Lufteinschlüssen zu vermeiden bzw. Luft abzuführen.

So kann gemäß einer weiteren Ausführungsvariante der Erfindung die Kontur der Innenschicht 4 vor dem Auflegen auf die Reifenaufbautrommel 10 derart vorgeformt werden, dass sie der Kontur der Taschen 11 in der Reifenaufbautrommel 10 entspricht. Dies kann durch eine vorformende Einrichtung im Servicer erfolgen oder knapp vor dem Auflaufen der Innenschicht 4 auf die Reifenaufbautrommel 10. Zum Vorformen können entsprechend konturierte Prägerollen oder -walzen verwendet werden. Der Vorformprozess der Innenschicht 4 kann durch eine Erwärmung der Innenschicht 4 mit Heißluft oder eine Beheizung der Prägrollen oder -walzen unterstützt werden. Eine entsprechende Beheizung der die Taschen 11 aufweisendenden Bereiche der Reifenaufbautrommel 10 kann ein optimales Positionieren der Innenschicht 4 ebenfalls unterstützen. Eine weitere Maßnahme, die sowohl das optimale Positionieren einer vorgeformten als auch einer nicht vorgeformten Innenschicht 4 auf der Reifenaufbautrommel 10 erleichtert, besteht darin, an der Reifenaufbautrommel im Bereich der Taschen 11 Kanäle vorzusehen, über welche die Innenschicht 4 angesaugt oder die Luft abgeführt werden kann. Von außen kann über weitere Maßnahmen, beispielsweise mittels Druckluft, ein Einpressen der Innenschicht 4 in die Taschen 11 unterstützt werden.

Bei einer weiteren Ausführungsvariante kann die vorgeformte Innenschicht 4 gemeinsam mit den bereits eingesetzten Verstärkungsprofilen 9 auf die Reifenaufbautrommel 10 aufgebracht werden. Das Zusammenführen von Innenschicht 4 und Verstärkungsprofilen 9 kann im Servicer oder zwischen Servicer und Reifenaufbautrommel erfolgen. Dabei muss sichergestellt werden, dass die Endbereiche der Innenschicht 4 nach dem Aufbringen auf die Reifenaufbautrommel überlappen können, die Enden der Verstärkungsprofile 9 jedoch stumpf aneinander stoßen. Ein gegenseitiger Versatz der Verstärkungsprofile 9 zur Innenschicht 4, die länger ausgeführt wird als die Verstärkungsprofile 9, gestattet ein Erstellen des Überlappungsbereiches der Innenschicht 4 bevor die Enden der Verstärkungsprofile 9 stumpf aneinander stoßen.

Bei einer weiteren Ausführungsform können die Verstärkungsprofile 9 derart auf die bereits auf die Reifenaufbautrommel aufgebrachte, vorgeformte Innenschicht 4 gesetzt werden, dass ein allmählicher Kontakt der Profile 9 mit der Innenschicht 4 stattfindet. Dazu werden die Profile 9 beim Drehen der Trommel entweder vom äußeren oder vom inneren Endbereich nach und nach auf die Innenschicht 4 "gekippt". Dies verhindert das Entstehen von Lufteinschlüssen.

Gemäß einer anderen Ausführungsform der Erfindung wird vorerst die vorgeformte Innenschicht 4 auf die Trommel aufgebracht, die Trommel etwas erhoben, sodass die Innenschicht 4 in den Taschen 11 gut zur Anlage kommt, anschließend werden die Verstärkungsprofile 9 und die Karkasslage(n) positioniert und schließlich die Erhebung der Trommel vollendet.

## Patentansprüche

1. Verfahren zum Aufbau einer Reifenkarkasse (3) auf einer Reifenaufbautrommel (10) für einen selbsttragenden Radialreifen, wobei die Reifenkarkasse (3) eine Innenschicht (4), Verstärkungsprofile (9) für Seitenwände (8) sowie Seitenwände (8), zumindest eine Karkasslage (3) und Wulstbereiche (5) aufweist und wobei die Reifenaufbautrommel (10) umlaufende Taschen (11) zum Aufnehmen der Verstärkungsprofile (9) aufweist,
**dadurch gekennzeichnet,**
**dass** die mit der Innenschicht (4) in Kontakt tretenden Bereiche der Verstärkungsprofile (9) mit einer Riffelung versehen werden, welche aus einer Vielzahl von quer zur Umfangsrichtung der Reifenaufbautrommel (10) verlaufenden durchgehenden Nuten (12) besteht.

2. Verfahren nach Anspruch 1, **dadurch gekennzeichnet, dass** die Riffelung mittels Prägewalzen erstellt wird.

3. Verfahren nach Anspruch 1 oder 2, **dadurch gekennzeichnet, dass** die Nuten (12) der Riffelung einen zumindest im Wesentlichen V-förmigen Querschnitt aufweisen.

4. Verfahren nach einem der Ansprüche 1 bis 3, **dadurch gekennzeichnet, dass** die Nuten (12) der Riffelung eine Tiefe von 0,3 bis 1,2 mm, insbesondere von 0,5 bis 0,8 mm, aufweisen.

5. Verfahren nach einem der Ansprüche 1 bis 4, **dadurch gekennzeichnet, dass** der gegenseitige Abstand der Nuten (12) 1 bis 2 mm beträgt.

6. Verfahren wenigstens nach Anspruch 1,
**dadurch gekennzeichnet,**
**dass** die Innenschicht (4) vor ihrem Aufbringen auf die Reifenaufbautrommel (10) entsprechend der Kontur der Ausnehmungen bzw. Taschen (11) vorgeformt wird.

7. Verfahren nach Anspruch 6, **dadurch gekennzeichnet, dass** das Vorformen der Innenschicht (4) mit Prägerollen oder -walzen durchgeführt wird.

8. Verfahren nach Anspruch 6 oder 7, **dadurch gekennzeichnet, dass** das Vorformen unter Erwärmung der Innenschicht (4), beispielsweise mittels Heißluft oder Beheizung der Prägerollen oder -walzen, durchgeführt wird.

9. Verfahren nach einem der Ansprüche 6 bis 8, **dadurch gekennzeichnet, dass** die Innenschicht (4) mit bereits positionierten Verstärkungsprofilen (9) auf die Reifenaufbautrommel (10) aufgelegt ist.

10. Verfahren nach Anspruch 8, **dadurch gekennzeichnet, dass** die Innenschicht (4) gegenüber den Verstärkungsprofilen (8) in Umfangsrichtung der Trommel versetzt positioniert wird.

11. Verfahren nach einem der Ansprüche 6 bis 8, **dadurch gekennzeichnet, dass** die Verstärkungsprofile (9) während des Drehens der Trommel in Trommelquerrichtung allmählich in Kontakt mit der Innenschicht (4) gebracht werden.

12. Verfahren nach einem der Ansprüche 6 bis 8, **dadurch gekennzeichnet, dass** die vorgeformte Innenschicht (4) auf die Trommel aufgebracht, die Trommel etwas erhoben wird, sodass anschließend die Verstärkungsprofile (9) und die Karkasslage(n) positioniert werden und schließlich die Erhebung der Trommel vollendet wird.

13. Verfahren nach einem der Ansprüche 1 bis 12, **dadurch gekennzeichnet, dass** die Reifenaufbautrommel (10) im Bereich der Taschen (11) mit Bohrungen oder Kanälen versehen wird.

14. Verfahren nach einem der Ansprüche 1 bis 13, **dadurch gekennzeichnet, dass** die positionierte Innenschicht (4) von außen mit Druckluft beaufschlagt wird.

15. Fahrzeugluftreifen in Radialbauart, welcher nach dem Verfahren gemäß zumindest einem der Ansprüche 1 bis 14 hergestellt ist.

## Claims

1. Method for manufacturing a tyre carcass (3) on a tyre building drum (10) for a self-supporting radial tyre, the tyre carcass (3) having an inner layer (4), reinforcing profiles (9) for side walls (8) and side walls (8), at least one carcass ply (3) and bead regions (5), and the tyre building drum (10) having peripheral pockets (11) for receiving the reinforcing profiles (9), **characterized in that** the regions of the reinforcing profiles (9) that come into contact with the inner layer (4) are provided with a ribbing, which comprises a multiplicity of continuous grooves (12) running transversely in relation to the peripheral direction of the tyre building drum (10).

2. Method according to Claim 1, **characterized in that** the ribbing is created by means of stamping rollers.

3. Method according to Claim 1 or 2, **characterized in that** the grooves (12) of the ribbing have an at least substantially V-shaped cross section.

4. Method according to one of Claims 1 to 3, **characterized in that** the grooves (12) of the ribbing have a depth of from 0.3 to 1.2 mm, in particular from 0.5 to 0.8 mm.

5. Method according to one of Claims 1 to 4, **characterized in that** the spacing between the grooves (12) is 1 to 2 mm.

6. Method according to at least Claim 1, **characterized**
**in that** the inner layer (4) is preformed in a way corresponding to the contour of the recesses or pockets (11) before application to the tyre building drum (10).

7. Method according to Claim 6, **characterized in that** the preforming of the inner layer (4) is carried out by means of stamping rolls or rollers.

8. Method according to Claim 6 or 7, **characterized in that** the preforming is carried out while the inner layer (4) is heated, for example by means of hot air or heating of the stamping rolls or rollers.

9. Method according to one of Claims 6 to 8, **characterized in that** the inner layer (4) is placed onto the tyre building drum (10) with reinforcing profiles (9) already positioned.

10. Method according to Claim 8, **characterized in that** the inner layer (4) is positioned offset in the circumferential direction of the drum with respect to the reinforcing profiles (9).

11. Method according to one of Claims 6 to 8, **characterized in that** the reinforcing profiles (9) are gradually brought into contact with the inner layer (4) in the direction transverse to the drum during the turning of the drum.

12. Method according to one of Claims 6 to 8, **characterized in that** the preformed inner layer (4) is applied to the drum, the drum is raised slightly, so that subsequently the reinforcing profiles (9) and the carcass ply/plies are positioned, and finally the raising of the drum is ended.

13. Method according to one of Claims 1 to 12, **characterized in that** the tyre building drum (10) is provided with bore-holes or channels in the region of the pockets (11).

14. Method according to one of Claims 1 to 13, **characterized in that** the positioned inner layer (4) is subjected to compressed air from the outside.

15. Pneumatic vehicle tyre of a radial type, which is produced by the method according to at least one of Claims 1 to 14.

## Revendications

1. Procédé de fabrication d'une carcasse pour pneu (3) sur un tambour de fabrication de pneu (10) pour un pneu radial autoportant, dans lequel la carcasse pour pneu (3) comprend une couche interne (4), des profilés de renforcement (9) pour des flancs (8) ainsi que des flancs (8), au moins un pli de carcasse (3) et des régions de talon (5) et dans lequel le tambour de fabrication de pneu (10) comprend des dépressions périphériques (11) destinées à recevoir les profilés de renforcement (9), **caractérisé en ce que** les régions des profilés de renforcement (9) venant en contact avec la couche interne (4) sont pourvues d'un striage qui se compose d'une pluralité de rainures continues (12) orientées transversalement à la direction périphérique du tambour de fabrication de pneu (10).

2. Procédé selon la revendication 1, **caractérisé en ce que** le striage est réalisé au moyen de cylindres d'estampage.

3. Procédé selon la revendication 1 ou 2, **caractérisé en ce que** les rainures (12) du striage présentent une section transversale au moins sensiblement en forme de V.

4. Procédé selon l'une quelconque des revendications 1 à 3, **caractérisé en ce que** les rainures (12) du striage présentent une profondeur de 0,3 à 1,2 mm, en particulier de 0,5 à 0,8 mm.

5. Procédé selon l'une quelconque des revendications 1 à 4, **caractérisé en ce que** la distance mutuelle des rainures (12) vaut de 1 à 2 mm.

6. Procédé au moins selon la revendication 1, **caractérisé en ce que** la couche interne (4) est préformée de manière correspondante au contour des évidements respectivement des dépressions (11) avant son application sur le tambour de fabrication de pneu (10).

7. Procédé selon la revendication 6, **caractérisé en ce que** le préformage de la couche interne (4) est effectué avec des rouleaux ou des cylindres d'estampage.

8. Procédé selon la revendication 6 ou 7, **caractérisé en ce que** le préformage est effectué avec chauffage de la couche interne (4), par exemple au moyen d'air chaud ou par chauffage des rouleaux ou des cylindres d'estampage.

9. Procédé selon l'une quelconque des revendications 6 à 8, **caractérisé en ce que** la couche interne (4) est déposée sur le tambour de fabrication de pneu (10) avec les profilés de renforcement (9) déjà mis en place.

10. Procédé selon la revendication 8, **caractérisé en ce que** la couche interne (4) est positionnée avec un décalage par rapport aux profilés de renforcement (9) dans la direction périphérique du tambour.

11. Procédé selon l'une quelconque des revendications 6 à 8, **caractérisé en ce que** les profilés de renforcement (9) sont mis progressivement en contact avec la couche interne (4) pendant la rotation du tambour, dans la direction transversale du tambour.

12. Procédé selon l'une quelconque des revendications 6 à 8, **caractérisé en ce que** la couche interne préformée (4) est appliquée sur le tambour, le tambour est légèrement soulevé, de telle façon que les profilés de renforcement (9) et le(s) pli(s) de carcasse soient ensuite positionnés et le soulèvement du tambour est finalement achevé.

13. Procédé selon l'une quelconque des revendications 1 à 12, **caractérisé en ce que** le tambour de fabrication de pneu (10) est pourvu d'alésages ou de canaux dans la région des dépressions (11).

14. Procédé selon l'une quelconque des revendications 1 à 13, **caractérisé en ce que** la couche interne positionnée (4) est exposée à de l'air comprimé par l'extérieur.

15. Bandage pneumatique de type radial pour véhicule, qui est fabriqué par le procédé selon au moins une des revendications 1 à 14.
